(19) Europäisches Patentamt

European Patent Office

Office européen des brevets

(11) **EP 1 358 771 B1**

(12) **EUROPÄISCHE PATENTSCHRIFT**

(45) Veröffentlichungstag und Bekanntmachung des Hinweises auf die Patenterteilung:
**05.07.2006 Patentblatt 2006/27**

(21) Anmeldenummer: **02712752.1**

(22) Anmeldetag: **30.01.2002**

(51) Int Cl.:
*H04Q 7/22* (2006.01)   *H04B 7/26* (2006.01)

(86) Internationale Anmeldenummer:
**PCT/DE2002/000450**

(87) Internationale Veröffentlichungsnummer:
**WO 2002/062086 (08.08.2002 Gazette 2002/32)**

(54) **DATENÜBERTRAGUNGSSYSTEM**

DATA TRANSMISSION SYSTEM

SYSTEME DE TRANSMISSION DE DONNEES

(84) Benannte Vertragsstaaten:
**DE FR GB IT**

(30) Priorität: **30.01.2001 DE 10103927**

(43) Veröffentlichungstag der Anmeldung:
**05.11.2003 Patentblatt 2003/45**

(73) Patentinhaber: **Infineon Technologies AG**
**81669 München (DE)**

(72) Erfinder:
• **BOETZEL, Ulrich**
  **41564 Kaarst (DE)**
• **NEUBAUER, Andre**
  **47807 Krefeld (DE)**
• **KRANZ, Christian**
  **40885 Ratingen Lintorf (DE)**

(74) Vertreter: **Lange, Thomas**
**Patentanwälte**
**Lambsdorff & Lange**
**Dingolfinger Strasse 6**
**81673 München (DE)**

(56) Entgegenhaltungen:
**EP-A- 0 670 640      EP-A- 0 926 845**
**US-A- 6 049 538**

• **KALIA M ET AL: "MAC scheduling and SAR policies for Bluetooth: a master driven TDD pico-cellular wireless system" INTERNATIONAL WORKSHOP ON MOBILE MULTIMEDIA COMMUNICATIONS, XX, XX, 15. November 1999 (1999-11-15), Seiten 384-388, XP002167155**
• **HAARTSEN J C: "THE BLUETOOTH RADIO SYSTEM" IEEE PERSONAL COMMUNICATIONS, IEEE COMMUNICATIONS SOCIETY, US, Bd. 7, Nr. 1, Februar 2000 (2000-02), Seiten 28-36, XP000908653 ISSN: 1070-9916**

**EP 1 358 771 B1**

**Beschreibung**

Die Erfindung betrifft ein System zur drahtlosen Übertragung von Daten zwischen einer Basisstation und mindestens zwei Mobilstationen.

Datenübertragungssysteme, bei denen Daten drahtlos über kurze Entfernungen von nur wenigen Metern zwischen einer Basisstation und Mobilstationen ausgetauscht werden, werden als Piconetze bezeichnet. Die zur Datenübertragung in Piconetzen zur Verfügung stehenden Frequenzen sind durch die ISM-Frequenzbereiche (Industrial, Scientific and Medical) festgelegt. Die ISM-Frequenzbereiche sind für die funkorientierte und lizenzlose Anwendung schwacher Sendeleistung reserviert.

Eine Datenübertragung von der Basisstation zu den Mobilstationen wird Downlink genannt. Der umgekehrte Fall der Datenübertragung von den Mobilstationen zur Basisstation trägt die Bezeichnung Uplink. Üblicherweise werden für die Datenübertragung Zeitschlitzverfahren verwendet siehe hierzu auch US-A-6 049 538. Bei Zeitschlitzverfahren werden den Down- und Uplinks Zeitschlitze (Slots) mit einer bestimmten zeitlichen Länge zugewiesen. Als Zeitschlitzverfahren kommen häufig das TDMA-Verfahren (Time Division Multiple Access) als Mehrfach-Zugriffsverfahren sowie das TDD-Verfahren (Time Division Duplex) als Duplexverfahren zur Bildung eines bidirektionalen Kanals zwischen der Basisstation und den Mobilstationen zum Einsatz.

Bei bisherigen auf einem Zeitschlitzverfahren basierenden Datenübertragungssystemen wird jedem Datenblock, der von der Basisstation an eine bestimmte Mobilstation oder von einer der Mobilstationen an die Basisstation gesendet werden soll, ein Zeitschlitz zugeordnet. Ein derartiges Zeitschlitzverfahren ist beispielsweise in der "Bluetooth Specification Version 1.0B" in Kapitel 2, "Physical Channel", (Internet-Adresse "www.bluetooth.com/developer/specification/Bluetooth_11_Speci fications_Book.pdf") und dort insbesondere in Kapitel 2.3 "Time Slots" (S. 43, 44) dargestellt. Werden aufeinanderfolgende Datenbursts von unterschiedlichen Stationen aus gesendet, so wäre es möglich, daß sich die Datenblöcke aufgrund von asynchronen Sendezyklen der Stationen zeitlich überlappen. Um einen derartigen Überlapp der von verschiedenen Stationen stammenden Datenbursts zu kompensieren, werden Schutzzeitintervalle (Guard Time Intervalls) zwischen die Übertragung der einzelnen Datenbursts eingeplant. Als Datenburst wird im folgenden eine ohne Unterbrechung übertragene Folge von einem oder mehreren Datenblöcken bezeichnet. Während der Schutzzeitintervalle findet keine Datenübertragung statt.

Der von der Federal Communications Commission (FCC) festgelegte Standard für die Nutzung der ISM-Frequenzbänder (Internet-Adresse "www.fcc.gov/oet/info/rules/part15/") definiert ein Frequenzsprungverfahren (Frequency Hopping Spread Spectrum) und legt fest, wie viele Frequenzwechsel innerhalb bestimmter Zeitspannen erfolgen müssen. Die diesbezüglichen Regelungen finden sich in Sektion 15.247 der FCC-Regelungen, und dort insbesondere in Sektion 15.247 (1) (ii). Bei Frequenzsprungverfahren wird die Übertragungsfrequenz nach der Übertragung einer bestimmten Anzahl von Datenblöcken verändert. Jede Änderung der Übertragungsfrequenz bedingt Einschwingzeiten der Frequenzsynthesizer auf die neue Übertragungsfrequenz. Die Einschwingzeiten sind bei der Länge der Schutzzeitintervalle zwischen den Datenblöcken zu berücksichtigen.

Nachteilig an den durch die Schutzzeitintervalle erzwungenen Übertragungspausen ist eine reduzierte Datenübertragungsrate. Des weiteren bedingen die Schutzzeitintervalle hohe Latenzzeiten. Mit Latenzzeiten sind hier die Zeiten gemeint, welche von Beginn einer Übertragung eines Datenblocks an eine bestimmte Station bis zum Empfang der Antwort dieser Station verstreichen. Die Latenzzeiten sind besonders ausschlaggebend in Systemen mit Echtzeitanforderungen.

Aufgabe der Erfindung ist es, ein Datenübertragungssystem zu schaffen, welches eine hohe Datenübertragungsrate ermöglicht, und bei dem die Latenzzeiten reduziert werden.

Die der Erfindung zugrundeliegende Aufgabenstellung wird durch die Merkmale der Ansprüche 1, 10 und 19 gelöst. Vorteilhafte Weiterbildungen und Ausgestaltungen sind in den Unteransprüchen angegeben.

Ein erfindungsgemäßes Datenübertragungssystem umfaßt eine Basisstation und mindestens zwei Mobilstationen, zwischen denen Datenbursts entsprechend einem Zeitschlitzverfahren über Funk ausgetauscht werden. Ein wesentlicher Gedanke der Erfindung besteht darin, daß das Datenübertragungssystem Mittel zur Übertragung erster Datenbursts von der Basisstation zu Mobilstationen aufweist, wobei die ersten Datenbursts zumindest teilweise mehrere Datenblöcke enthalten, welche für verschiedene Mobilstationen bestimmt sind. Des weiteren umfaßt das Datenübertragungssystem Mittel zur Übertragung zweiter Datenbursts von mindestens einer der Mobilstationen zu der Basisstation. Die zweiten Datenbursts enthalten für die Basisstation bestimmte Datenblöcke. Zwischen aufeinanderfolgenden Datenbursts werden Schutzzeitintervalle eingehalten, die von geeigneten Mitteln erzeugt werden.

Die Mittel zur Übertragung der Datenbursts und zur Erzeugung der Schutzzeitintervalle umfassen insbesondere die Sende- und Empfangseinrichtungen der Basis- und Mobilstationen.

Ein Vorteil des erfindungsgemäßen Datenübertragungssystems ist, daß mit einem einzigen ersten Datenburst mehrere für verschiedene Mobilstationen bestimmte Datenblöcke übertragen werden. Daher ist es nicht notwendig, zwischen den für die verschiedenen Mobilstationen bestimmten Datenblöcken Schutzzeitintervalle einzuhalten. Da die für verschiedene Mobilstationen bestimmten Datenblöcke in dem ersten Datenburst von nur einem Sender, nämlich der

2

Basisstation, übertragen werden, können die Schutzzeitintervalle zur Kompensation asynchroner Sendezyklen entfallen. Daraus ergibt sich eine hohe Datenübertragungsrate.

Ein weiterer Vorteil ist, daß bei der Übertragung eines ersten Datenbursts zu Beginn des Datenbursts übertragene gemeinsame Informationen (z.B. Identifizierungsinformationen des Piconetzes) nur einmal für mehrere Datenblöcke übertragen werden müssen. Dadurch kann die zur Verfügung stehende Bandbreite besser genutzt werden.

Die Erfindung ermöglicht eine Verkürzung der Übertragungszeit für einen Rahmen sowie eine Verkürzung der Latenzzeit. Das erfindungsgemäße Datenübertragungssystem eignet sich daher insbesondere für den Einsatz in Systemen mit Echtzeitanforderungen.

Für sich wiederholende, gleich strukturierte Übertragungssequenzen zwischen der Basisstation und bestimmten Mobilstationen läßt sich ein Rahmen definieren. Beispielsweise kann ein Rahmen einen ersten Datenburst, welcher Datenblöcke für bestimmte Mobilstationen enthält, und nachfolgend mehrere zweite Datenbursts, die von bestimmten Mobilstationen an die Basisstation gesendet werden, enthalten. Durch das erfindungsgemäße Datenübertragungssystem verringert sich die Übertragungszeit für einen solchen Rahmen und somit werden die Latenzzeiten verkürzt.

Eine bevorzugte Ausgestaltung der Erfindung sieht vor, daß die Basisstation und jede Mobilstation jeweils einen lokalen Oszillator aufweisen. Die Frequenz des lokalen Oszillators dient im Sendebetrieb dazu, die Basisbandsignale auf die Sendefrequenz heraufzumischen. Im Empfangsbetrieb werden empfangene Signale durch die lokale Oszillatorfrequenz auf ein Zwischenfrequenzband herabgemischt. Lokale Oszillatoren können durch kostengünstige elektronische Bauelemente realisiert werden.

Vorteilhafterweise sind die lokalen Oszillatoren jeweils in einen Phasenregelkreis (PLL; Phase Locked Loop) eingebunden. Der Phasenregelkreis regelt die Frequenz des lokalen Oszillators auf die Frequenz eines Bezugsoszillators und zwar so genau, daß die Phasendifferenz erhalten bleibt. Durch den Phasenregelkreis läßt sich sowohl eine Frequenz empfangen als auch eine gewünschte Frequenz erzeugen. Durch Verwendung eines Phasenregelkreises kann die empfängerseitige Oszillatorfrequenz an die Sendefrequenz angeglichen werden.

Gemäß einer besonders bevorzugten Ausgestaltung der Erfindung werden alternierend erste Datenbursts und Gruppen von zweiten Datenbursts übertragen. Dabei kann vorgesehen sein, daß ein erster Datenburst und eine nachfolgende Gruppe von zweiten Datenbursts mit unterschiedlichen Frequenzen übertragen werden, und/oder daß eine Gruppe von zweiten Datenbürsts und ein nachfolgender erster Datenburst mit unterschiedlichen Frequenzen übertragen werden. Des weiteren wird vorzugsweise die Übertragungsfrequenz während der Übertragung eines ersten Datenbursts bzw. während der Übertragung einer Gruppe von zweiten Datenbursts konstant gehalten. Aufgrund dieser Maßnahme müssen die lokalen Oszillatoren lediglich bei Wechseln von ersten zu zweiten Datenbursts bzw. von zweiten zu ersten Datenbursts auf eine neue Übertragungsfrequenz eingeschwungen werden. Die Einschwingzeiten erzwingen das Einhalten von relativ langen Schutzzeitintervallen. Da die Übertragungsfrequenz während der Übertragung einer Gruppe von zweiten Datenbursts nicht geändert wird, können die Schutzzeitintervalle zwischen aufeinanderfolgende zweite Datenbursts dagegen relativ kurz sein, weil keine Einschwingvorgänge stattfinden. Dadurch wird die Datenübertragungsrate entsprechend erhöht.

Vorzugsweise wird zwischen einem ersten Datenburst und einem nachfolgenden zweiten Datenburst ein gleich langes Schutzzeitintervall eingehalten wie zwischen einem zweiten Datenburst und einem nachfolgenden ersten Datenburst. Die Regelungen der FCC zu den ISM-Frequenzbändern erfordern eine bestimmte Anzahl von Frequenzwechseln innerhalb bestimmter Zeitspannen. Die Schutzzeitintervalle können zum Umschwingen auf eine neue Übertragungsfrequenz dienen. Es kann auch vorgesehen sein, daß die Schutzzeitintervalle zwischen aufeinanderfolgenden zweiten Datenbursts gleiche Längen aufweisen. Der Zweck dieser Schutzzeitintervalle ist der Schutz vor zeitlicher Überlappung von zweiten Datenbursts wegen eventueller asynchroner Sendezyklen der Stationen, beispielsweise infolge von Taktdrift. Diese Schutzzeitintervalle zwischen aufeinanderfolgenden zweiten Datenbursts sind im Regelfall kürzer als die Schutzzeitintervalle zwischen ersten und zweiten Datenbursts, weil hier kein neues Einschwingen der Oszillatoren erforderlich ist.

Eine besonders bevorzugte Ausgestaltung der Erfindung ist dadurch gekennzeichnet, daß zu Beginn der Übertragung jedes ersten und jedes zweiten Datenbursts die jeweiligen Sender eine Identifizierungsinformation des Piconetzes erzeugen. Anhand einer derartigen Kennung erkennt der jeweilige Empfänger den Beginn der Übertragung eines für das zugehörige Piconetz bestimmten Datenbursts. Durch die erfindungsgemäße Anordnung der für verschiedene Mobilstationen bestimmten Datenblöcke in einem einzigen ersten Datenburst muß nicht für jeden an eine Mobilstation übertragenen Datenblock eine Identifizierungsinformation gesendet werden. Daraus resultiert eine höhere Datenübertragungsrate.

Gemäß einer weiteren vorteilhaften Ausführungsform der Erfindung enthalten die ersten Datenbursts mehrere Datenblöcke, wobei für jede der Mobilstationen ein Datenblock vorhanden ist. Außerdem ist es von Vorteil, wenn in der Gruppe von zweiten Datenbursts jeweils ein zweiter Datenburst von jeder der Mobilstationen vorhanden ist. Der Vorteil dieser Maßnahme liegt in der Standardisierung der Übertragungssequenz. Dadurch, daß in jedem ersten Datenburst jede Mobilstation angesprochen wird, bzw. jeder Mobilstation in einer Gruppe von zweiten Datenbursts ein Zeitschlitz zum Übertragen eines zweiten Datenbursts zugeteilt wird, ist die Übertragungssequenz klar strukturiert. Die Alternative

3

hierzu wäre, vor der Übertragung jedes ersten Datenbursts bzw. jeder Gruppe von zweiten Datenbursts zu überprüfen, an welche Mobilstationen Datenblöcke übertragen werden sollen, bzw. welche der Mobilstationen einen Zeitschlitz zur Datenübertragung an die Basisstation benötigen. Durch eine derart inhomogene Rahmenstruktur würde die Latenzzeit verschlechtert.

Das erfindungsgemäße Datenübertragungssystem läßt sich beispielsweise in schnurlosen Kommunikationssystemen mit geringer Reichweite einsetzen. Von Vorteil wäre dieses bei schnurlosen Telefonen mit mehreren Mobilteilen. Eine weitere Anwendungsmöglichkeit stellen Computer-gesteuerte Spielesysteme dar. Die Mobilstationen wären hier die Gamepads der einzelnen Mitspieler. Aufgrund der geringen Latenzzeit ist die Verwendung des erfindungsgemäßen Datenübertragungssytems besonders vorteilhaft bei Systemen, an die eine Echtzeitanforderung gestellt wird. Bei Echtzeitsystemen muß eine auf Seiten der Mobilstation erfolgte Eingabe innerhalb einer definierten, nicht überschreitbaren Zeitspanne zur Feststation übertragen sein. Entsprechend muß ein auf Seiten der Basisstation vorliegender Datenblock in einer nicht überschreitbaren Zeitspanne zur Mobilstation übermittelt sein. Eine derartige Echtzeitanforderung ist bei computergesteuerten Spielesystemen gegeben.

Die erfindungsgemäße Rahmenstruktur dient zur Funkübertragung von Datenbursts zwischen einer Basisstation und mindestens zwei Mobilstationen. Die Rahmenstruktur weist erste Datenbursts auf, die von der Basisstation zu Mobilstationen übertragen werden. Die ersten Datenbursts enthalten zumindest teilweise mehrere Datenblöcke, welche für verschiedene Mobilstationen bestimmt sind. Des weiteren weist die Rahmenstruktur zweite Datenbursts auf, die von mindestens einer der Mobilstationen zu der Basisstation übertragen werden. Die zweiten Datenbursts enthalten Datenblöcke, die für die Basisstation bestimmt sind. Zwischen aufeinanderfolgenden Datenbursts weist die erfindungsgemäße Rahmenstruktur Schutzzeitintervalle auf.

Vorteilhaft an der erfindungsgemäßen Rahmenstruktur ist, daß zwischen den für die Mobilstationen bestimmten Datenblöcken keine Schutzzeitintervalle eingehalten werden müssen. Da die für verschiedene Mobilstationen bestimmten Datenblöcke in dem ersten Datenburst von nur einem Sender, nämlich der Basisstation, übertragen werden, können Schutzzeitintervalle zur Kompensation asynchroner Sendezyklen eingespart werden. Dadurch wird sowohl die Übertragungszeit eines Rahmens als auch die Latenzzeit verkürzt.

Die Erfindung wird nachfolgend in beispielhafter Weise unter Bezugnahme auf die Zeichnungen erläutert. Es zeigen:

Fig. 1     den Aufbau eines aus einer Basisstation und vier Mobilstationen bestehenden Datenübertragungssystems;

Fig. 2     ein Schaubild einer Rahmenstruktur, wie sie bei bisherigen Datenübertragungssystemen eingesetzt wird; und

Fig. 3     ein Schaubild einer erfindungsgemäßen Rahmenstruktur.

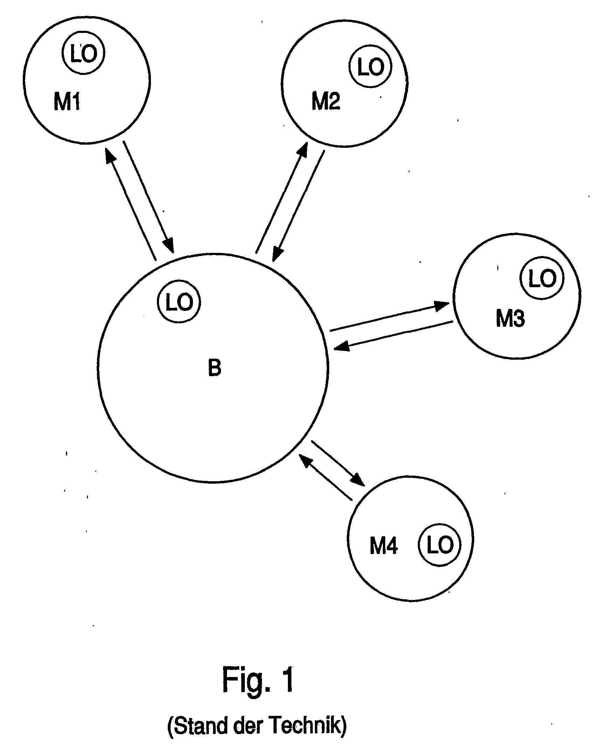

Fig. 1 zeigt ein Datenübertragungssystem, welches eine Basisstation B und beispielsweise vier Mobilstationen Mi (i = 1,..., 4) umfaßt. Die Basisstation B kann Daten über Funk an jede der Mobilstationen Mi übertragen. Ebenso können die Mobilstationen Mi Daten über Funk an die Basisstation B übertragen. Zur Datenübertragung über Funk stehen der Basisstation B und den Mobilstationen Mi jeweils ein lokaler Oszillator LO zur Verfügung. Ein solches Datenübertragungssystem bestehend aus einer Basisstation und N Mobilstationen wird als Piconetz bezeichnet und weist nur eine geringe Reichweite auf.

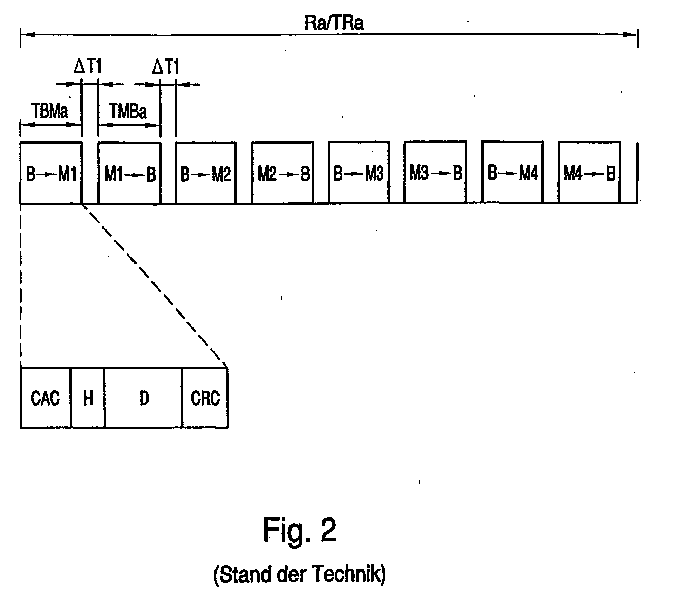

Fig. 2 zeigt eine Rahmenstruktur, die beispielsweise im Bluetooth-Standard genutzt wird, um Daten zwischen der Basisstation B ("Master") und den Mobilstationen Mi ("Slaves") auszutauschen. Innerhalb eines Rahmens Ra werden Datenbursts als Downlinks von der Basisstation B an jede der Mobilstationen Mi übertragen. Alternierend zu den Downlinks sendet jede der Mobilstationen Mi nach dem Empfang eines Datenbursts einen Datenburst als Uplink an die Basisstation B. Jedem Datenburst ist ein eigener Zeitschlitz zugeordnet. Für die Übertragung eines Datenbursts von der Basisstation B zu einer Mobilstation Mi steht ein Zeitschlitz TBMa zur Verfügung. Die Übertragung eines Datenbursts von einer Mobilstation Mi zur Basisstation B erfolgt während eines Zeitschlitzes TMBa. Nach der Übertragung eines Datenbursts wird jeweils ein Schutzzeitintervall $\Delta T1$ eingehalten, während dem keine Datenübertragung erfolgt.

Beispielsweise kann vorgesehen sein, daß die Übertragungsfrequenz nach jedem Down- oder Uplink variiert wird. Damit die lokalen Oszillatoren LO der Stationen auf die neue Übertragungsfrequenz eingeschwungen werden können, sind zwischen der Übertragung einzelner Datenbursts Schutzzeitintervalle $\Delta T1$ vorgesehen. Falls keine Änderung der Übertragungsfrequenz zwischen aufeinanderfolgenden Datenbursts erfolgt, dienen die Schutzzeitintervalle $\Delta T1$ dazu, eventuelle asynchrone Sendezyklen der Stationen zu kompensieren.

Bei der Fig. 2 gezeigten Rahmenstruktur läßt sich die für die Übertragung eines Rahmens Ra benötigte Zeit TRa nach folgender Gleichung berechnen:

$$TRa = N \cdot (TBMa + TMBa + 2 \cdot \Delta T1) \qquad (1)$$

Für Gleichung (1) wurde der allgemeinere Fall angenommen, bei welchem das Datenübertragungssystem N verschiedene Mobilstationen aufweist.

Jeder der in Fig. 2 gezeigten Datenbursts umfaßt verschiedene Gruppen von Daten und Informationen. Beispielsweise werden im Bluetooth-Standard zu Beginn eines Datenbursts Identifizierungsinformationen CAC (Channel Access Code) des Piconetzes gesendet, danach folgt der eigentliche, zu übertragende Datenblock mit Header-Informationen H, Nutzdaten D und einem Kontrollbitmuster CRC (Cyclic Redundancy Check) zur Fehlererkennung und -korrektur der übertragenen Nutzdaten D.

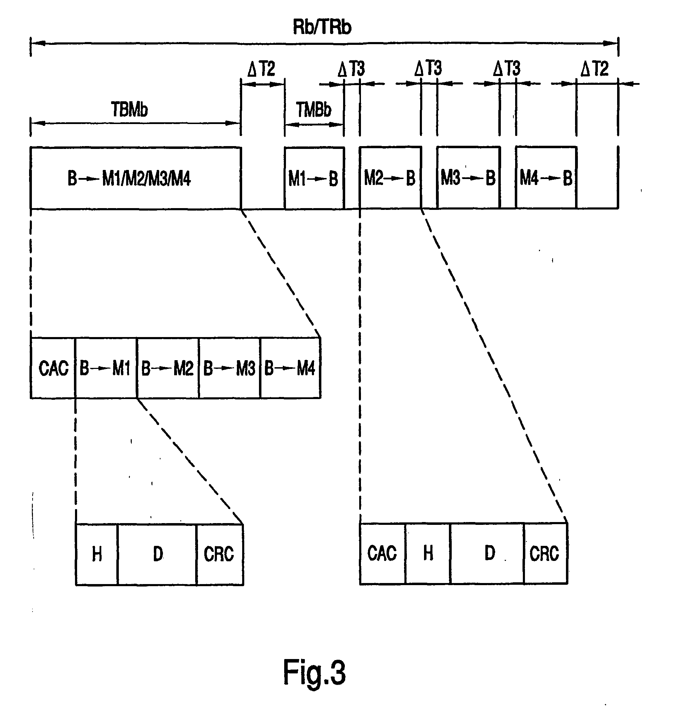

In Fig. 3 ist als Ausführungsbeispiel der Erfindung die Struktur eines Rahmens Rb dargestellt, welcher bei einem erfindungsgemäßen Datenübertragungssystem zwischen der Basisstation B und den Mobilstationen Mi übertragen wird. In einem ersten Datenburst wird als Downlink jeweils ein Datenblock von der Basisstation B zu jeder der Mobilstationen Mi übertragen. Der Datenblock, der von der Basisstation B zu der Mobilstation M1 übertragen wird, ist in Fig. 3 mit "B → M1" bezeichnet. Entsprechend trägt der von B zu M2 übertragene Datenblock die Bezeichnung "B → M2", etc.. Für den ersten Datenburst ist ein Zeitschlitz TBMb eingeplant. Nach der Übertragung des ersten Datenbursts folgt ein Schutzzeitintervall $\Delta T2$. Während des Schutzzeitintervalls $\Delta T2$ werden die lokalen Oszillatoren LO auf eine neue Übertragungsfrequenz eingeschwungen. Danach werden sukzessive Datenbursts von jeder der Mobilstationen Mi an die Basisstation B als Uplinks übertragen. Für jeden dieser Datenbursts steht ein Zeitschlitz TMBb zur Verfügung. Die Übertragungsfrequenz bleibt während der Übertragung der Uplinks konstant. Zwischen den Uplinks werden Schutzzeitintervalle $\Delta T3$ eingehalten, um z.B. ein eventuelles zeitliches Überlappen der Uplinks wegen asynchroner Sendezyklen zu verhindern. Auf die Übertragung der Uplinks folgt wiederum ein Schutzzeitintervall $\Delta T2$. Während dieser Zeit wird die Übertragungsfrequenz für die Übertragung eines neuen Rahmens Rb geändert.

Bei der Übertragung eines Rahmes Rb muß sichergestellt werden, daß die Bestimmungen der FCC eingehalten werden. Das bedeutet, daß die für die Datenbursts vorgesehenen Zeitschlitze TBMb und TMBb kurz genug sind, um die Übertragungsfrequenz hinreichend häufig wechseln zu können.

Wie in Fig. 2 beinhalten die Datenblöcke in dem Fig. 3 gezeigten Ausführungsbeispiel Header-Informationen H, Nutzdaten D und ein Kontrollbitmuster CRC. Die Header-Informationen H der Datenblöcke "B → Mi", i = 1,..., 4, stellen Identifizierungsinformationen für die jeweiligen Mobilstationen Mi dar und umfassen im Bluethooth-Standard beispielsweise eine 3-Bit Adresse der Mobilstation Mi. Die Header-Informationen H der Datenblöcke "Mi → B", i = 1,.., 4, sind die Identifizierungsinformationen für die Basisstation B, d.h. deren Adresse. Zu Beginn eines Datenbursts werden Identifizierungsinformationen CAC des Piconetzes gesendet (im Bluetooth-Standard bezeichnet CAC den sogenannten Channel Access Code, welcher durch eine 72 Bit lange Sequenz gebildet wird).

Für den allgemeinen Fall mit N beteiligten Mobilstationen ergibt sich eine Übertragungszeit TRb eines erfindungsgemäßen Rahmens Rb nach folgender Gleichung:

$$TRb = TBMb + N \cdot TMBb + 2 \cdot \Delta T2 + (N - 1) \cdot \Delta T3 \qquad (2)$$

Um Gleichung (1) mit Gleichung (2) vergleichen zu können, sei angenommen, daß der Zeitschlitz TBMb eines ersten Datenbursts gemäß dem in Fig. 3 dargestellten Ausführungsbeispiel gleich dem N-fachen Zeitschlitz TBMa sei. Des weiteren sollen die Zeitschlitze TBMa, TMBa und TMBb gleiche Längen T aufweisen. Ebenfalls identisch seien die Schutzzeitintervalle $\Delta T1$, $\Delta T2$ und $\Delta T3$ mit einer gemeinsamen Länge $\Delta T$. Dann ergibt sich für Gleichung (1):

$$TRa = 2 \cdot N \cdot T + 2 \cdot N \cdot \Delta T \qquad (3)$$

Gleichung (2) nimmt unter den oben genannten Näherungen die folgende Form an:

$$TRb = 2 \cdot N \cdot T + (N + 1) \cdot \Delta T \qquad (4)$$

Nach den Gleichungen (3) und (4) ist die Übertragungszeit TRb des erfindungsgemäßen Ausführungsbeispiels kürzer als die Übertragungszeit TRa gemäß Fig. 2, sofern das Datenübertragungssystem mindestens zwei Mobilstationen Mi aufweist. Diese Verkürzung resultiert aus dem Einsparen von Schutzzeitintervallen zwischen den Datenblöcken des ersten Datenbursts in Fig. 3.

Bei dem Vergleich der Gleichungen (3) und (4) wurde noch nicht berücksichtigt, daß bei dem erfindungsgemäßen ersten Datenburst die Übertragung von N-1 Identifizierungsinformationen CAC entfällt. Dieses verkürzt ebenfalls die Übertragungszeit TRb gegenüber TRa.

Zusammenfassend wird eine TDMA- und TDD-Struktur mit bidirektionalen Kanälen zwischen den Mobilstationen Mi und der Basisstation B geschaffen, welche insofern "asymmetrisch" ist, als für den Uplink getrennte unidirektionale Kanäle und für den Downlink ein gemeinsamer Kanal mit dynamischer Zuteilung der Datenrate verwendet werden.

## Patentansprüche

1. Datenübertragungssystem, welches eine Basisstation (B) und mindestens zwei Mobilstationen (Mi) eines Piconetzes aufweist, zwischen welchen Datenbursts entsprechend einem Zeitschlitzverfahren über Funk ausgetauscht werden, mit

   - Mitteln zur Übertragung erster Datenbursts von der Basisstation (B) zu Mobilstationen (Mi), wobei die ersten Datenbursts zumindest teilweise mehrere Datenblöcke enthalten, welche für verschiedene Mobilstationen (Mi) bestimmt sind, und wobei die Mittel zur Übertragung erster Datenbursts Mittel zur Erzeugung einer Identifizierungsinformation (CAC) des Piconetzes aufweisen, die nur zu Beginn der Übertragung jedes ersten Datenbursts eine Identifizierungsinformation (CAC) erzeugen,
   - Mitteln zur Übertragung zweiter Datenbursts von jeweils einer der Mobilstationen (Mi) zu der Basisstation (B), wobei ein zweiter Datenburst einen für die Basisstation (B) bestimmten Datenblock enthält, und wobei die Mittel zur Übertragung zweiter Datenbursts Mittel zur Erzeugung einer Identifizierungsinformation (CAC) des Piconetzes aufweisen, die zu Beginn der Übertragung jedes zweiten Datenbursts eine Identifizierungsinformation (CAC) erzeugen, und
   - Mitteln zum Erzeugen von Schutzzeitintervallen ($\Delta$T2, $\Delta$T3) zwischen aufeinanderfolgenden Datenbursts.

2. Datenübertragungssystem nach Anspruch 1,
   **dadurch gekennzeichnet,**

   - **daß** die Basisstation (B) und jede Mobilstation (Mi) jeweils einen lokalen Oszillator (LO) aufweisen, welcher insbesondere mit einem Phasenregelkreis in Verbindung steht.

3. Datenübertragungssystem nach Anspruch 1 oder 2,
   **dadurch gekennzeichnet,**

   - **daß** alternierend erste Datenbursts und Gruppen von zweiten Datenbursts übertragen werden.

4. Datenübertragungssystem nach Anspruch 3,
   **dadurch gekennzeichnet,**

   - **daß** ein erster Datenburst und eine nachfolgende Gruppe von zweiten Datenbursts unterschiedliche Übertragungsfrequenzen aufweisen, und/oder
   - **daß** eine Gruppe von zweiten Datenbursts und ein nachfolgender erster Datenburst unterschiedliche Übertragungsfrequenzen aufweisen.

5. Datenübertragungssystem nach Anspruch 4,
   **dadurch gekennzeichnet,**

   - **daß** die Übertragungsfrequenz eines ersten Datenbursts bzw. einer Gruppe von zweiten Datenbursts während der Übertragung konstant ist.

6. Datenübertragungssystem nach einem der vorhergehenden Ansprüche,
   **dadurch gekennzeichnet,**

   - **daß** das Schutzzeitintervall ($\Delta$T2) zwischen einem ersten Datenburst und einem nachfolgenden zweiten Datenburst gleich dem Schutzzeitintervall ($\Delta$T2) zwischen einem zweiten Datenburst und einem nachfolgenden ersten Datenburst ist.

7. Datenübertragungssystem nach einem der vorhergehenden Ansprüche,
   **dadurch gekennzeichnet,**

   - **daß** die Schutzzeitintervalle (ΔT3) zwischen aufeinanderfolgenden zweiten Datenbursts gleiche Längen aufweisen.

8. Datenübertragungssystem nach einem der vorhergehenden Ansprüche,
   **dadurch gekennzeichnet,**

   - **daß** die ersten Datenbursts mehrere Datenblöcke enthalten, wobei für jede der Mobilstationen (Mi) ein Datenblock vorhanden ist, und
   - **daß** in der Gruppe von zweiten Datenbursts jeweils ein zweiter Datenburst von jeder der Möbilstationen (Mi) vorhanden ist.

9. Datenübertragungssystem nach einem der vorhergehenden Ansprüche,
   **dadurch gekennzeichnet,**

   - **daß** das Datenübertragungssystem

     -- in schnurlosen Kommunikationssystemen oder
     -- in Computer-gesteuerten Unterhaltungssystemen, insbesondere in Computer-gesteuerten Spielesystemen, oder
     -- in Systemen mit Echtzeitanforderungen einsetzbar ist.

10. Rahmenstruktur für die Funkübertragung von Datenbursts zwischen einer Basisstation (B) und mindestens zwei Mobilstationen (Mi) eines Piconetzes, welche

    - erste Datenbursts aufweist, die von der Basisstation (B) zu Mobilstationen (Mi) übertragen werden, wobei die ersten Datenbursts zumindest teilweise mehrere Datenblöcke, welche für verschiedene Mobilstationen (Mi) bestimmt sind, und zu Beginn jedes ersten Datenbursts eine Identifizierungsinformation (CAC) des Piconetzes enthalten,
    - zweite Datenbursts aufweist, die von jeweils einer der Mobilstationen (Mi) zu der Basisstation (B) übertragen werden, wobei ein zweiter Datenburst einen für die Basisstation (B) bestimmten Datenblock und zu Beginn des zweiten Datenbursts eine Identifizierungsinformation (CAC) des Piconetzes enthält, sowie
    - Schutzzeitintervalle (ΔT2) zwischen aufeinanderfolgenden Datenbursts aufweist.

11. Rahmenstruktur nach Anspruch 10,
    **dadurch gekennzeichnet,**

    - **daß** die Basisstation (B) und jede Mobilstation (Mi) jeweils einen lokalen Oszillator (LO) aufweisen, welcher insbesondere mit einem Phasenregelkreis in Verbindung steht.

12. Rahmenstruktur nach Anspruch 10 oder 11,
    **dadurch gekennzeichnet,**

    - **daß** alternierend erste Datenbursts und Gruppen von zweiten Datenbursts übertragen werden.

13. Rahmenstruktur nach Anspruch 12,
    **dadurch gekennzeichnet,**

    - **daß** ein erster Datenburst und eine nachfolgende Gruppe von zweiten Datenbursts unterschiedliche Übertragungsfrequenzen aufweisen, und/oder
    - **daß** eine Gruppe von zweiten Datenbursts und ein nachfolgender erster Datenburst unterschiedliche Übertragungsfrequenzen aufweisen.

14. Rahmenstruktur nach Anspruch 13,

**dadurch gekennzeichnet,**

- **daß** die Übertragungsfrequenz eines ersten Datenbursts bzw. einer Gruppe von zweiten Datenbursts während der Übertragung konstant ist.

15. Rahmenstruktur nach einem der Ansprüche 10 bis 14,
**dadurch gekennzeichnet,**

- **daß** das Schutzzeitintervall (ΔT2) zwischen einem ersten Datenburst und einem nachfolgenden zweiten Datenburst gleich dem Schutzzeitintervall (ΔT2) zwischen einem zweiten Datenburst und einem nachfolgenden ersten Datenburst ist.

16. Rahmenstruktur nach einem der Ansprüche 10 bis 15,
**dadurch gekennzeichnet,**

- **daß** die Schutzzeitintervalle (ΔT3) zwischen aufeinanderfolgenden zweiten Datenbursts gleiche Längen aufweisen.

17. Rahmenstruktur nach einem der Ansprüche 10 bis 16,
**dadurch gekennzeichnet,**

- **daß** die ersten Datenbursts mehrere Datenblöcke enthalten, wobei für jede Mobilstation (Mi) ein Datenblock vorhanden ist, und
- **daß** in der Gruppe von zweiten Datenbursts jeweils ein zweiter Datenburst von jeder der Mobilstationen (Mi) vorhanden ist.

18. Rahmenstruktur nach einem der Ansprüche 10 bis 17,
**dadurch gekennzeichnet,**

- **daß** die Rahmenstruktur für die Datenübertragung

-- in schnurlosen Kommunikationssystemen oder
-- in Computer-gesteuerten Unterhaltungssystemen, insbesondere in Computer-gesteuerten Spielesystemen, oder
-- in Systemen mit Echtzeitanforderungen einsetzbar ist.

19. Verfahren zur Funkübertragung von Daten in einem Piconetz zwischen einer Basisstation (B) einerseits und mindestens zwei Mobilstationen (Mi) andererseits, welches folgende Schritte aufweist:

(1) Übertragen eines ersten Datenbursts von der Basisstation (B) zu Mobilstationen (Mi), welcher mehrere Datenblöcke enthält, die für verschiedene Mobilstationen (Mi) bestimmt sind, und wobei die Basisstation (B) nur zu Beginn der Übertragung eines ersten Datenbursts eine Identifizierungsinformation (CAC) des Piconetzes sendet;
(2) Einhalten eines Schutzzeitintervalls (ΔT2); und
(3) Übertragen zweiter Datenbursts von jeweils einer der Mobilstationen (Mi) zu der Basisstation (B), wobei ein zweiter Datenburst einen für die Basisstation (B) bestimmten Datenblock enthält, und jede Mobilstation (Mi) zu Beginn der Übertragung eines zweiten Datenbursts eine Identifizierungsinformation (CAC) des Piconetzes sendet.

20. Verfahren nach Anspruch 19,
**dadurch gekennzeichnet,**

- **daß** die Basisstation (B) und jede Mobilstation (Mi) Datenbursts mittels jeweils eines lokalen Oszillators (LO), welcher insbesondere mit einem Phasenregelkreis in Verbindung steht, senden und empfangen.

21. Verfahren nach Anspruch 19 oder 20,
**dadurch gekennzeichnet,**

- **daß** alternierend erste Datenbursts und Gruppen von zweiten Datenbursts übertragen werden.

**22.** Verfahren nach Anspruch 21,
**dadurch gekennzeichnet,**

- **daß** ein erster Datenburst und eine nachfolgende Gruppe von zweiten Datenbursts mit unterschiedlichen Frequenzen übertragen werden, und/oder
- **daß** eine Gruppe von zweiten Datenbursts und ein nachfolgender erster Datenburst mit unterschiedlichen Frequenzen übertragen werden.

**23.** Verfahren nach Anspruch 22,
**dadurch gekennzeichnet,**
**daß** die Übertragungsfrequenz während der Übertragung eines ersten Datenbursts bzw. während der Übertragung einer Gruppe von zweiten Datenbursts konstant gehalten wird.

**24.** Verfahren nach einem der Ansprüche 19 bis 23,
**dadurch gekennzeichnet,**

- **daß** zwischen einem ersten Datenburst und einem nachfolgenden zweiten Datenburst ein Schutzzeitintervall (ΔT2) von gleicher Länge eingehalten wird wie zwischen einem zweiten Datenburst und einem nachfolgenden ersten Datenburst.

**25.** Verfahren nach einem der Ansprüche 19 bis 24,
**dadurch gekennzeichnet,**

- **daß** zwischen aufeinanderfolgenden zweiten Datenbursts Schutzzeitintervalle (ΔT3) gleicher Länge eingehalten werden.

**26.** Verfahren nach einem der Ansprüche 19 bis 25,
**dadurch gekennzeichnet,**

- **daß** die ersten Datenbursts mehrere Datenblöcke enthalten, wobei für jede der Mobilstationen (Mi) ein Datenblock vorhanden ist, und
- **daß** der Gruppe von zweiten Datenbursts jeweils ein zweiter Datenburst von jeder der Mobilstationen (Mi) vorhanden ist.

**27.** Verfahren nach einem der Ansprüche 19 bis 26,
**dadurch gekennzeichnet,**

- **daß** das Verfahren

-- in schnurlosen Kommunikationssystemen oder
-- in Computer-gesteuerten Unterhaltungssystemen, insbesondere in Computer-gesteuerten Spielesystemen, oder
-- in Systemen mit Echtzeitanforderungen eingesetzt wird.

**Claims**

**1.** Data transmission system, which has a base station (B) and at least two mobile stations (Mi) in a piconetwork between which data bursts are interchanged by radio using a time slot method, having

- means for transmission of first data bursts from the base station (B) to mobile stations (Mi), with the first data bursts at least in some cases containing two or more data blocks which are intended for different mobile stations (Mi), and with the means for transmission of first data bursts having means for production of identification information (CAC) for the piconetwork, which means produce identification information (CAC) only at the start of the transmission of each first data burst,
- means for transmission of second data bursts from in each case one of the base stations (Mi) to the base station (B), when a second data burst containing a data block which is intended for the base station (B), and with the means for transmission of second data bursts having means for production of identification information (CAC) for the piconetwork, which means produce identification information (CAC) at the start of the transmission of each second data burst, and
- means for production of guard time intervals ($\Delta$T2, $\Delta$T3) between successive data bursts.

2. Data transmission system according to Claim 1,
   **characterized**

   - **in that** the base station (B) and each mobile station (Mi) each have a local oscillator (LO) which, in particular, is connected to a phase locked loop.

3. Data transmission system according to Claim 1 or 2,
   **characterized**

   - **in that** first data bursts and groups of second data bursts are transmitted alternately.

4. Data transmission system according to Claim 3,
   **characterized**

   - **in that** a first data burst and a subsequent group of second data bursts are at different transmission frequencies, and/or
   - **in that** one group of second data bursts and a subsequent first data burst are at different transmission frequencies.

5. Data transmission system according to Claim 4,
   **characterized**

   - **in that** the transmission frequency of a first data burst or of a group of second data bursts is constant during the transmission.

6. Data transmission system according to one of the preceding claims,
   **characterized**

   - **in that** the guard time interval ($\Delta$T2) between a first data burst and a subsequent second data burst is equal to the guard time interval ($\Delta$T2) between a second data burst and a subsequent first data burst.

7. Data transmission system according to one of the preceding claims,
   **characterized**

   - **in that** the guard time intervals ($\Delta$T3) between successive second data bursts have equal lengths.

8. Data transmission system according to one of the preceding claims,
   **characterized**

   - **in that** the first data bursts contain two or more data blocks, with one data block being provided for each of the mobile stations (Mi), and
   - **in that** a second data burst from each of the mobile stations (Mi) is in each case provided in the group of second data bursts.

9. Data transmission system according to one of the preceding claims,
   **characterized**

   - **in that** the data transmission system can be used

     -- in cordless communication systems, or
     -- in computer-controlled entertainment systems, in particular in computer-controlled games systems, or
     -- in systems with real-time requirements.

**10.** Frame structure for radio transmission of data bursts between a base station (B) and at least two mobile stations (Mi) in a piconetwork which

- has first data bursts which are transmitted from the base station (B) to mobile stations (Mi), with at least some of the first data burst containing two or more data blocks which are intended for different mobile stations (Mi), and contain identification information (CAC) for the piconetwork at the start of each data burst,
- has second data bursts, which are transmitted from in each case one of the mobile stations (Mi) to the base station (B), with a second data burst containing a data block which is intended for the base station (B) and containing identification information (CAC) for the piconetwork at the start of the second data burst, and
- has guard time intervals (ΔT2) between successive data bursts.

**11.** Frame structure according to Claim 10,
**characterized**

- **in that** the base station (B) and each mobile station (Mi) each have a local oscillator (LO) which, in particular, is connected to a phase locked loop.

**12.** Frame structure according to Claim 10 or 11,
**characterized**

- **in that** first data bursts and groups of second data bursts are transmitted alternately.

**13.** Frame structure according to Claim 12,
**characterized**

- **in that** a first data burst and a subsequent group of second data bursts are at different transmission frequencies, and/or
- **in that** one group of second data bursts and a subsequent first data burst are at different transmission frequencies.

**14.** Frame structure according to Claim 13,
**characterized**

- **in that** the transmission frequency of a first data burst or of a group of second data bursts is constant during the transmission.

**15.** Frame structure according to one of Claims 10 to 14,
**characterized**

- **in that** the guard time interval (ΔT2) between a first data burst and a subsequent second data burst is equal to the guard time interval (ΔT2) between a second data burst and a subsequent first data burst.

**16.** Frame structure according to one of Claims 10 to 15,
**characterized**

- **in that** the guard time intervals (ΔT3) between successive second data bursts have equal lengths.

**17.** Frame structure according to one of Claims 10 to 16,
**characterized**

- **in that** the first data bursts contain two or more data blocks, with one data block being provided for each of the mobile stations (Mi), and
- **in that** a second data burst from each of the mobile stations (Mi) is in each case provided in the group of second data bursts.

**18.** Frame structure according to one of Claims 10 to 17,
**characterized**

- **in that** the frame structure can be used for data transmission

-- in cordless communication systems, or
-- in computer-controlled entertainment systems, in particular in computer-controlled games systems, or
-- in systems with real-time requirements.

19. Method for radio transmission of data in a piconetwork between a base station (B) on the one hand and at least two mobile stations (Mi) on the other hand, which method has the following steps:

(1) transmission of a first data burst from the base station (B) to mobile stations (Mi), with the first data burst containing two or more data blocks which are intended for different mobile stations (Mi) and with the base station (B) transmitting identification information (CAC) for the piconetwork only at the start of the transmission of a first data burst;
(2) provision of a guard type interval ($\Delta$T2); and
(3) transmission of second data bursts from in each case one of the mobile stations (Mi) to the base station (B), with a second data burst containing a data block which is intended for the base station (B), and each mobile station (Mi) transmitting identification information (CAC) for the piconetwork at the start of the transmission of a second data burst.

20. Method according to Claim 19,
**characterized**

- **in that** the base station (B) and each mobile station (Mi) transmit and receive data bursts by means of in each case one local oscillator (LO) which is, in particular, connected to a phase locked loop.

21. Method according to Claim 19 or 20,
**characterized**

- **in that** first data bursts and groups of second data bursts are transmitted alternately.

22. Method according to Claim 21,
**characterized**

- **in that** a first data burst and a subsequent group of second data bursts are at different transmission frequencies, and/or
- **in that** one group of second data bursts and a subsequent first data burst are at different transmission frequencies.

23. Method according to Claim 22,
**characterized**

- **in that** the transmission frequency is kept constant during the transmission of a first data burst or during the transmission of a group of second data bursts.

24. Method according to one of Claims 19 to 23,
**characterized**

- **in that** a guard time interval ($\Delta$T2) is provided between a first data burst and a subsequent second data burst and has the same length as that between a second data burst and a subsequent first data burst.

25. Method according to one of Claims 19 to 24,
**characterized**

- **in that** guard time intervals ($\Delta$T3) of the same length are provided between successive second data bursts.

26. Method according to one of Claims 19 to 25,
**characterized**

- **in that** the first data bursts contain two or more data blocks, with one data block being provided for each of the mobile stations (Mi), and
- **in that** a second data burst from each of the mobile stations (Mi) is in each case provided in the group of second data bursts.

27. Method according to one of Claims 19 to 26,
**characterized**

- **in that** the method can be used

-- in cordless communication systems, or
-- in computer-controlled entertainment systems, in particular in computer-controlled games systems, or
-- in systems with real-time requirements.

**Revendications**

1. Système de transmission de données, qui comporte une station de base (B) et au moins deux stations mobiles (Mi) d'un pico-réseau entre lesquelles des salves de données sont échangées par radio selon un procédé à créneaux temporels, comportant

- des moyens pour la transmission de premières salves de données de la station de base (B) à des stations mobiles (Mi), les premières salves de données contenant au moins en partie plusieurs blocs de données qui sont destinés à différentes stations mobiles (Mi) et les moyens pour la transmission de premières salves de données comportant des moyens pour la production d'une information d'identification (CAC) du pico-réseau qui ne produisent une information d'identification (CAC) qu'au début de la transmission de chaque première salve de données,
- des moyens pour la transmission de deuxièmes salves de données à chaque fois de l'une des stations mobiles (Mi) à la station de base (B), une deuxième salve de données contenant un bloc de données destiné à la station de base (B) et les moyens pour la transmission de deuxièmes salves de données comportant des moyens pour la production d'une information d'identification (CAC) du pico-réseau qui produisent une information d'identification (CAC) au début de la transmission de chaque deuxième salve de données, et
- des moyens pour la production d'intervalles de temps de garde ($\Delta$T2, $\Delta$T3) entre des salves de données successives.

2. Système de transmission de données selon la revendication 1,
**caractérisé par le fait que**

- la station de base (B) et chaque station mobile (Mi) comportent chacune un oscillateur local (LO) qui est en liaison notamment avec une boucle à verrouillage de phase.

3. Système de transmission de données selon la revendication 1 ou 2,
**caractérisé par le fait que**

- des premières salves de données et des groupes de deuxièmes salves de données sont transmis en alternance.

4. Système de transmission de données selon la revendication 3,
**caractérisé par le fait que**

- une première salve de données et un groupe suivant de deuxièmes salves de données ont des fréquences de transmission différentes, et/ou
- un groupe de deuxièmes salves de données et une première salve de données suivante ont des fréquences de transmission différentes.

5. Système de transmission de données selon la revendication 4,
**caractérisé par le fait que**

- la fréquence de transmission d'une première salve de données ou d'un groupe de deuxièmes salves de données est constante pendant la transmission.

6. Système de transmission de données selon l'une des revendications précédentes, **caractérisé par le fait que**

- l'intervalle de temps de garde ($\Delta$T2) entre une première salve de données et une deuxième salve de données suivante est égal à l'intervalle de temps de garde ($\Delta$T2) entre une deuxième salve de données et une première salve de données suivante.

7. Système de transmission de données selon l'une des revendications précédentes, **caractérisé par le fait que**

- les intervalles de temps de garde ($\Delta$T3) entre des deuxièmes salves de données successives ont la même longueur.

8. Système de transmission de données selon l'une des revendications précédentes, **caractérisé par le fait que**

- les premières salves de données contiennent plusieurs blocs de données, un bloc de données étant prévu pour chacune des stations mobiles (Mi), et
- une deuxième salve de données de chacune des stations mobiles (Mi) est prévue dans le groupe de deuxièmes salves de données.

9. Système de transmission de données selon l'une des revendications précédentes, **caractérisé par le fait que**

- le système de transmission de données est utilisable

-- dans des systèmes de communication sans fil ou
-- dans des systèmes de divertissement sur ordinateur, notamment dans des systèmes de jeux sur ordinateur, ou
-- dans des systèmes ayant des exigences de temps réel.

10. Structure de trame pour la transmission radio de salves de données entre une station de base (B) et au moins deux stations mobiles (Mi) d'un pico-réseau, qui comporte

- des premières salves de données qui sont transmises de la station de base (B) à des stations mobiles (Mi), les premières salves de données contenant au moins en partie plusieurs blocs de données qui sont destinés à différentes stations mobiles (Mi) et une information d'identification (CAC) au début de chaque première salve de données,
- des deuxièmes salves de données qui sont transmises à chaque fois de l'une des stations mobiles (Mi) à la station de base (B), une deuxième salve de données contenant un bloc de données destiné à la station de base (B) et une information d'identification (CAC) du pico-réseau au début de la deuxième salve de données,
- ainsi que des intervalles de temps de garde ($\Delta$T2) entre des salves de données successives.

11. Structure de trame selon la revendication 10, **caractérisée par le fait que**

- la station de base (B) et chaque station mobile (Mi) comportent chacune un oscillateur local (LO) qui est en liaison notamment avec une boucle à verrouillage de phase.

12. Structure de trame selon la revendication 10 ou 11, **caractérisée par le fait que**

- des premières salves de données et des groupes de deuxièmes salves de données sont transmis en alternance.

13. Structure de trame selon la revendication 12, **caractérisée par le fait que**

- une première salve de données et un groupe suivant de deuxièmes salves de données ont des fréquences de transmission différentes, et/ou
- un groupe de deuxièmes salves de données et une première salve de données suivante ont des fréquences de transmission différentes.

**14.** Structure de trame selon la revendication 13,
**caractérisée par le fait que**

- la fréquence de transmission d'une première salve de données ou d'un groupe de deuxièmes salves de données est constante pendant la transmission.

**15.** Structure de trame selon l'une des revendications 10 à 14,
**caractérisée par le fait que**

- l'intervalle de temps de garde ($\Delta T2$) entre une première salve de données et une deuxième salve de données suivante est égal à l'intervalle de temps de garde ($\Delta T2$) entre une deuxième salve de données et une première salve de données suivante.

**16.** Structure de trame selon l'une des revendications 10 à 15,
**caractérisée par le fait que**

- les intervalles de temps de garde ($\Delta T3$) entre des deuxièmes salves de données successives ont la même longueur.

**17.** Structure de trame selon l'une des revendications 10 à 16,
**caractérisée par le fait que**

- les premières salves de données contiennent plusieurs blocs de données, un bloc de données étant prévu pour chacune des stations mobiles (Mi), et
- une deuxième salve de données de chacune des stations mobiles (Mi) est prévue dans le groupe de deuxièmes salves de données.

**18.** Structure de trame selon l'une des revendications 10 à 17,
**caractérisée par le fait que**

- la structure de trame pour la transmission de données est utilisable

-- dans des systèmes de communication sans fil ou
-- dans des systèmes de divertissement sur ordinateur, notamment dans des systèmes de jeux sur ordinateur, ou
-- dans des systèmes ayant des exigences de temps réel.

**19.** Procédé pour la transmission par radio de données dans un pico-réseau entre une station de base (B) d'une part et au moins deux stations mobiles (Mi) d'autre part, qui comporte les étapes suivantes :

(1) transmission d'une première salve de données de la station de base (B) à des stations mobiles (Mi), laquelle première salve de données contient plusieurs blocs de données qui sont destinés à différentes stations mobiles (Mi), la station de base (B) n'émettant une information d'identification (CAC) du pico-réseau qu'au début de la transmission d'une première salve de données ;
(2) respect d'un intervalle de temps de garde ($\Delta T2$) ; et
(3) transmission de deuxièmes salves de données à chaque fois de l'une des stations mobiles (Mi) à la station de base (B), une deuxième salve de données contenant un bloc de données destiné à la station de base (B) et chaque station mobile (Mi) émettant une information d'identification (CAC) du pico-réseau au début de la transmission d'une deuxième salve de données.

**20.** Procédé selon la revendication 19,
**caractérisé par le fait que**

- la station de base (B) et chaque station mobile (Mi) émettent et reçoivent des salves de données au moyen chacune d'un oscillateur local (LO) qui est en liaison notamment avec une boucle à verrouillage de phase.

**21.** Procédé selon la revendication 19 ou 20,
   **caractérisé par le fait que**

   - des premières salves de données et des groupes de deuxièmes salves de données sont transmis en alternance.

**22.** Procédé selon la revendication 21,
   **caractérisé par le fait que**

   - une première salve de données et un groupe suivant de deuxièmes salves de données sont transmis avec des fréquences différentes, et/ou
   - un groupe de deuxièmes salves de données et une première salve de données suivante sont transmis avec des fréquences différentes.

**23.** Procédé selon la revendication 22,
   **caractérisé par le fait que**
   la fréquence de transmission pendant la transmission d'une première salve de données ou pendant la transmission d'un groupe de deuxièmes salves de données est maintenue constante.

**24.** Procédé selon l'une des revendications 19 à 23,
   **caractérisé par le fait que**

   - entre une première salve de données et une deuxième salve de données suivante, on respecte un intervalle de temps de garde ($\Delta$T2) de même longueur que l'intervalle de temps de garde entre une deuxième salve de données et une première salve de données suivante.

**25.** Procédé selon l'une des revendications 19 à 24,
   **caractérisé par le fait que**

   - entre des deuxièmes salves de données successives, on respecte des intervalles de temps de garde ($\Delta$T3) de même longueur.

**26.** Procédé selon l'une des revendications 19 à 25,
   **caractérisé par le fait que**

   - les premières salves de données contiennent plusieurs blocs de données, un bloc de données étant prévu pour chacune des stations mobiles (Mi), et
   - une deuxième salve de données de chacune des stations mobiles (Mi) est prévue dans le groupe de deuxièmes salves de données.

**27.** Procédé selon l'une des revendications 19 à 26,
   **caractérisé par le fait que**

   - le procédé est utilisé

      -- dans des systèmes de communication sans fil ou
      -- dans des systèmes de divertissement sur ordinateur, notamment dans des systèmes de jeux sur ordinateur, ou
      -- dans des systèmes ayant des exigences de temps réel.

## Fig. 1

(Stand der Technik)

Fig. 2

(Stand der Technik)

Fig.3